# EUROPEAN PATENT APPLICATION

(11) **EP 4 119 403 A1**
(43) Date of publication of application: **18.01.2023**
(21) Application number: 22185273.4
(22) Date of filing: 15.07.2022
(51) Int. Cl.: B60S 3/04, B08B 17/00

(54) **SYSTEMS AND METHODS FOR PROTECTING PAVEMENT OR FLOORING**

(30) Priority: 15.07.2021 US 202163222008 P
(71) Applicant: Tirebib, LLC, Guilderland, NY 12084 (US)
(72) Inventor: BIBBO, Michael, Guilderland, 12084 (US)
(74) Representative: Buzzi, Franco

(57) **Abstract**

A protector for protecting pavement or flooring while cleaning a vehicle tire may generally include an elongated body having a top side, a bottom side, and a peripheral edge disposed between the top side and the bottom side. A notch extends from the top side to the bottom side and inwardly from the peripheral edge. The notch is sized and configured so that the protector is positionable with the bottom side disposed on the pavement or flooring and with the notch extending around a portion of the tire treads in contact with the pavement or flooring.

## Description

### TECHNICAL FIELD

This present disclosure relates in general to tire/wheel cleaning and dressing, and, more particularly to systems and methods for protecting pavement or flooring from tire/wheel cleaning and dressing products.

### BACKGROUND

A vehicle owner or other person cleaning a vehicle and after using water and a detergent, such as soap, may apply a preservative or shine product to tires/wheels of the vehicle. When applying such products, the product may also be inadvertently applied to the flooring or pavement upon which the tires rest. Such application of the cleaning, preserving, or shining product often stains the flooring or pavement. Such a process also occurs at a vehicle detail center, car wash, or car dealership, for example.

### SUMMARY

Shortcomings of the prior art are overcome and additional advantages are provided through the provision, in one embodiment, of a protector for protecting pavement or flooring while cleaning a vehicle tire. The protector includes an elongated body having a top side, a bottom side, and a peripheral edge disposed between the top side and the bottom side. A notch extends from the top side to the bottom side and inwardly from the peripheral edge. The notch is sized and configured so that the protector is positionable with the bottom side disposed on the pavement or flooring and with the notch extending around a portion of the tire treads in contact with the pavement or flooring.

In some embodiments, the notch is sized and configured so that the protector is positionable with the bottom side disposed on the pavement or flooring and with the notch extending around a side wall of the tire, underneath a front side of the treads of the tire in contact with the pavement or flooring, and underneath a back side of the treads of the tire in contact with the pavement or flooring. In further embodiments, the elongated body may include a plurality of fold lines so that the elongated body has a folded compact configuration and a second unfolded configuration. Still further embodiments may include at least one protectant and/or cleaning product.

In another embodiment, a method is provided for protecting pavement or flooring while cleaning a tire of a vehicle. The method may include providing a protector having an elongated body with a notch, and positioning the elongated body on the pavement or flooring with the notch underneath a portion of the tire of the vehicle contacting the pavement or flooring so that a portion of the protector is disposed alongside and underneath the tire of the vehicle. The method may include positioning the elongated body underneath a forward portion of the tire, and underneath a back portion of the tire, and/or unfolding the protector.

In other embodiments, the method may include spraying the tire with a product, collecting overspray of the product on the protector, cleaning the tire, removing the protector from underneath the tire, and positioning the notch underneath a portion of a second tire of the vehicle contacting the pavement or flooring so that a portion of the protector is disposed underneath and in front of a side wall of the second tire of the vehicle.

### BRIEF DESCRIPTION OF THE DRAWINGS

The subject matter which is regarded as the disclosure is particularly pointed out and distinctly claimed in the concluding portion of the specification. The disclosure, however, may best be understood by reference to the following detailed description of various embodiments and the accompanying drawings in which:
FIG. 1 is a perspective view of a system for protecting pavement or flooring disposed adjacent to a tire/wheel of a vehicle from products applied to the tire/wheel, according to an embodiment of the present disclosure;
FIG. 2 is a top view of the protector of FIG. 1, according to an embodiment of the present disclosure;
FIG. 3 is a bottom view of the protector of FIG. 1, according to an embodiment of the present disclosure;
FIG. 4 are top views of a process for unfolding the protector of FIG. 1, according to an embodiment of the present disclosure;
FIGS. 5-7 are perspective views of the system of FIG. 1 and process for protecting pavement or flooring disposed adjacent to a tire/wheel of a vehicle from products applied to the tire/wheel, according to an embodiment of the present disclosure;
FIG. 8 is a front side view of a system for protecting pavement or flooring disposed adjacent to a tire/wheel, according to an embodiment of the present disclosure;
FIG. 9 is a perspective view of a protector for protecting pavement or flooring disposed adjacent to a tire/wheel of a vehicle from products applied to the tire/wheel, according to an embodiment of the present disclosure;
FIG. 10 is an enlarged top view of the left portion of the protector of FIG. 9, according to an embodiment of the present disclosure;
FIG. 11A is a partial cross-sectional view of the protector taken along line 11A-11A in FIG. 9, according to an embodiment of the present disclosure;
FIG. 11B is a partial cross-sectional view of the protector taken along line 11B-11B in FIG. 9, according to an embodiment of the present disclosure;
FIG 12 is a top view of the protector of FIG. 9 disposed in an expanded configuration, according to an embodiment of the present disclosure;
FIGS. 13-17 are perspective views of a protector and system for protecting pavement or flooring disposed adjacent to a tire/wheel of a vehicle from products applied to the tire/wheel, according to an embodiment of the present disclosure;
FIGS. 18 and 19 are bottom views of the system of FIGS. 13-17, according to an embodiment of the present disclosure;
FIG. 20 is a front side view of the system of FIGS. 13-17, according to an embodiment of the present disclosure;
FIG. 21 is a top view of a protector for protecting pavement or flooring from products applied to a tire/wheel, according to an embodiment of the present disclosure;
FIG. 22 is a top view of a waffle material for forming protectors, according to an embodiment of the present disclosure;
FIGS. 23 is a top view of a solid material for forming protectors, according to an embodiment of the present disclosure; and
FIG. 24 is a flowchart of a method for protecting pavement or flooring while cleaning a tire of a vehicle, according to an embodiment of the present disclosure.

### DETAILED DESCRIPTION

In accordance with the principles of the present disclosure, systems, protectors, and methods are provided for protecting pavement and flooring from products applied to vehicle tires and/or wheels.

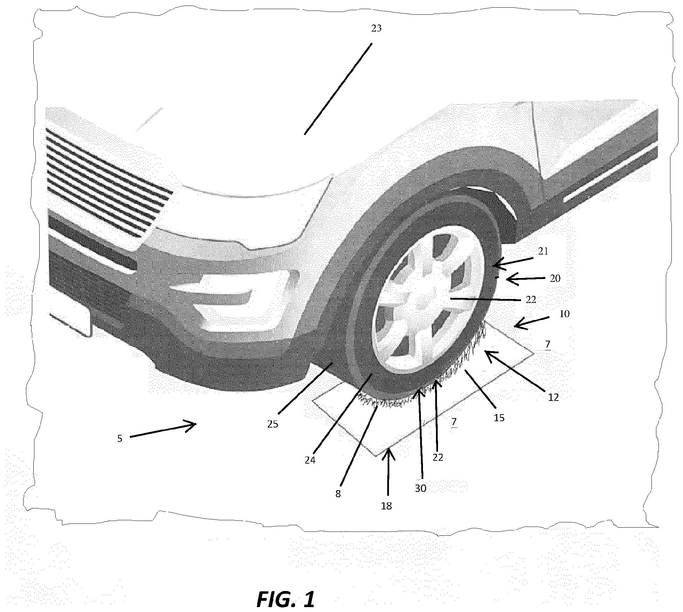

FIG. 1 illustrates a system 5 for use when cleaning a tire/wheel 20 of a vehicle 23, according to an embodiment of the present disclosure. For example, system 5 is operable for protecting pavement or flooring 7 from overspray 8 when cleaning, preserving, or otherwise treating with one or more products a tire 21 such as a rubber tire, and/or a wheel 22 such as a metal hub, spokes, and rim. As described in greater detail below, a system 5 includes a protector 10 positionable on pavement or flooring 7 around at least a portion of tire/wheel 20 contacting the pavement or flooring 7 so that a portion of protector 10 is disposed around and/or underneath an outer sidewall 24 of tire 21 and underneath a tire tread 25 of tire 21. For example, system 5 may be readily positioned when the vehicle is parked without the need to move vehicle 23.

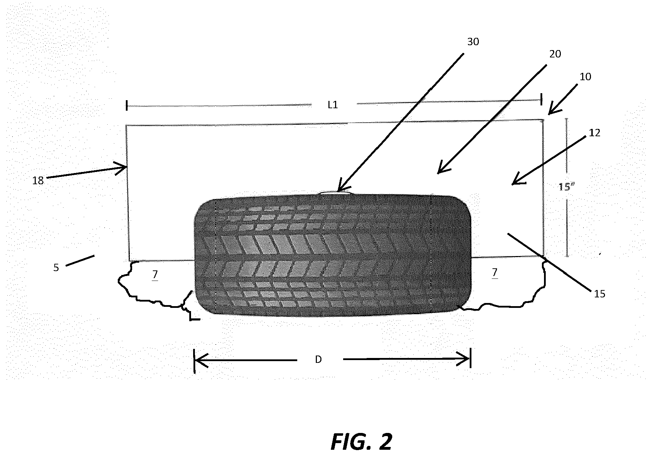

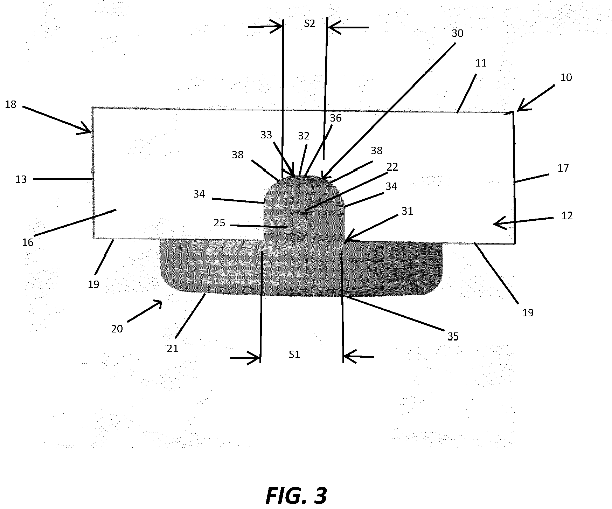

FIG. 2 illustrates a top view depicting protector 10 disposed adjacent to tire/wheel 20. FIG. 3 illustrates a bottom view depicting protector 10 without showing the pavement or flooring on which tire/wheel 20 may rest such that a portion of tread 25 of tire 21 may extend through an opening or notch 30 in protector 10 to contact pavement or flooring 7 (FIG. 2).

As depicted in FIGS. 1-3, protector 10 for protecting pavement or flooring 7 may include an elongated body 12 having a length L1 (FIG. 2) longer than a diameter D (FIG. 2) of tire/wheel 20. Elongated body 12 may include a top surface 15, a bottom surface 16 (FIG. 3), and a peripheral edge 18. As shown in FIG. 3, peripheral edge 18 may include a first major edge 11, a first minor edge 13, a second minor edge 17, and second major edge 19. An opening, cutout, or notch 30 may extend from top surface 15 (FIG. 2) to bottom surface 16 to allow protector 10 to be inserted adjacent to tire 21.

With reference still to FIG. 3, in this illustrated embodiment, elongated body 12 of protector 10 may have notch 30 having an arc 32 and opposite straight sides 34 bounding notch 30. For example, notch 30 may have a half obround configuration. Straight sides 34 may bound notch 30 such that a distance S1 between opposite straight sides is about 9 inches at an open end 31 and at a closed end 33. In other embodiments, arc 32 could have a straight portion or edge 36, e.g., having a distance S2 of about 4 inches, opposite open end 31 between two opposite curved portions 38 connecting to straight sides 34. Such dimensions may be appropriate for most tires since notch 30 is utilized to allow protector 10 to be placed around a portion 25 of tire 21 contacting pavement or flooring 7, and the indicated dimensions may be appropriate to allow protector 10 to be placed around a portion of most tires which contacts pavement or flooring 7 when the tire is inflated to a usual range of tire pressures.

In other examples, notch 30 may be sized or shaped differently to allow protector 10 to be placed around tires of different sizes and/or at different pressurizations to protect pavement or flooring around such tires when being cleaned, preserved, or otherwise treated. For example, protector 10 may bound a square or rectangular opening instead of an arc to receive a tire.

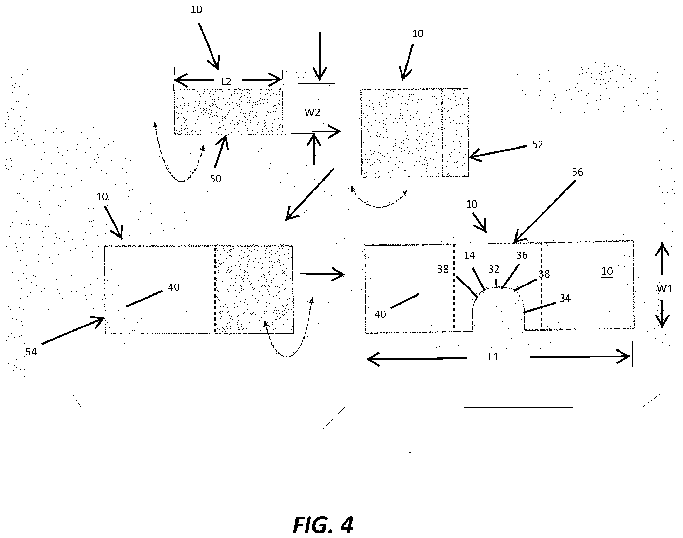

With reference to FIG. 4, in some embodiments, protector 10 may be foldable, or may be rolled up, to minimize a space for storage and/or transport thereof, according to an embodiment of the present disclosure. For example, protector 10 may include a plurality of fold lines which may include creases, a series of creases, or perforations to facilitate folding along such lines.

For example, FIG. 4 illustrates an unfolding of protector 10 from a smallest folded arrangement or configuration 50 to a one third-folded arrangement or configuration 52, to a two-thirds unfolded arrangement or configuration 54, to an unfolded arrangement or configuration 56. Such reduction in length and/or width while increasing a thickness of protector 10 may allow better portability and/or storage of protector 10. For example, in an unfolded or usable arrangement or configuration, protector 10 may have a length L1 of about 47 inches by a width W1 of about 15 inches when unfolded completely, and a length L2 of about 15-2/3 inches by a width W2 of about 5 inches when folded such that protector 10 could be received in a packing for sale with other tires protectant and/or cleaning products.

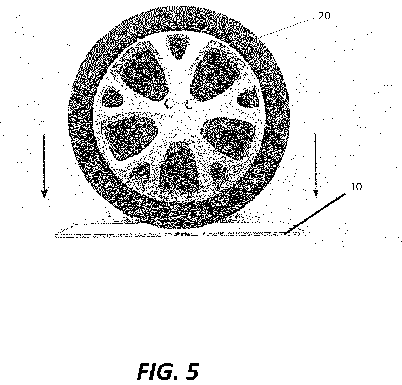

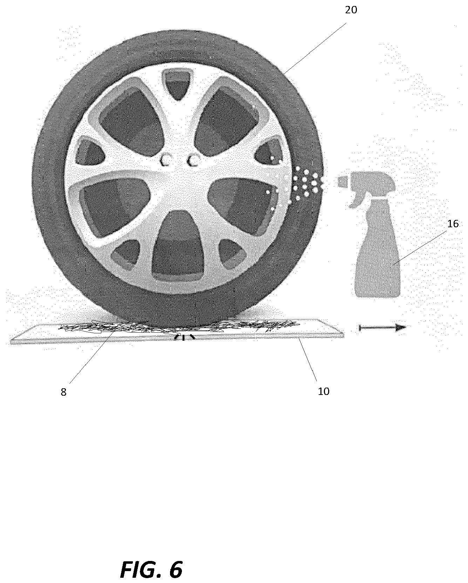

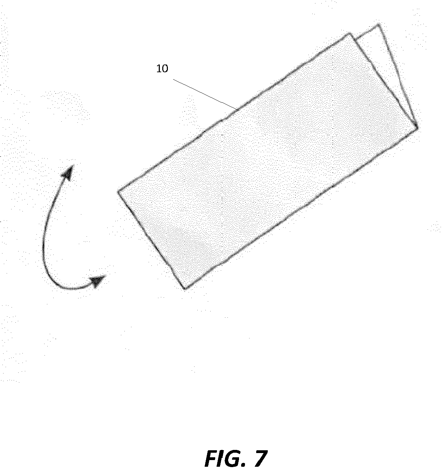

As depicted in FIG. 5, protector 10 may be placed in an unfolded arrangement or configuration in front of tire/wheel 20 prior to cleaning and/or treating the tire/wheel as by spraying a cleaning product 16 for tires/wheels and/or rims and collecting overspray 8 as depicted in FIG. 6. After such spraying of cleaning and/or treating, protector 10 may be folded for later use as depicted in FIG. 7 into one of various folded states such as described above and depicted in FIG. 4. Alternatively, a protector (e.g., protector 10) may be rolled out and slid around a tire/wheel prior to such cleaning and may be re-rolled up after such cleaning. Protector 10 may be moved sequentially to each tire/wheel and used for cleaning each of the four tires of the vehicle and protecting the flooring or pavement from overspray of products.

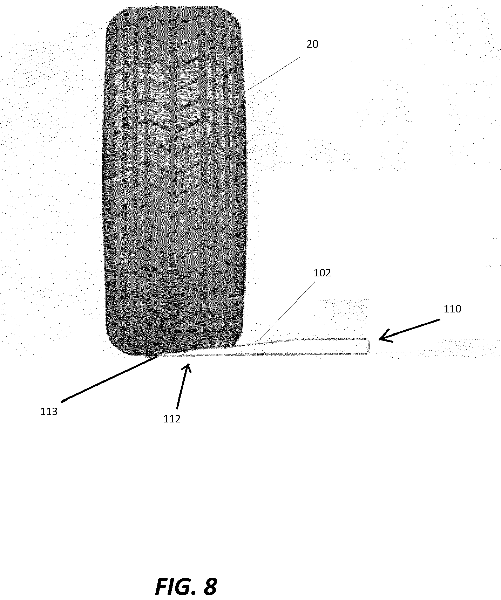

With reference to FIG. 8, a protector 110 may include a sloped portion 102 disposed on a side 112 configured to fit around tire/wheel 20, according to an embodiment of the present disclosure. For example, protector 110 may be essentially the same as protector 10 (FIG. 1) with the exception of having the sloped portion. Such a sloped portion may have a thicker portion on an inside portion thereof with protector 110 becoming thinner toward an edge 113 thereof to allow protector 110 fit snugly and to be received further under and/or around tire 20 relative to protector 10 (FIG. 1). More specifically, edge 113 may be thinner than an equivalent location of protector 10 such that edge 113 may be received into a smaller opening where tire 20 does not contact pavement or flooring 7, and the slope of protector 110 may allow protector 110 to be more easily pushed or otherwise placed in any such openings, such that protector 110 may be frictionally engaged with tire/wheel 20 thereby minimizing a chance of inadvertent separation of protector 110 from tire/wheel 20 during treatment and/or cleaning of tire/wheel 20.

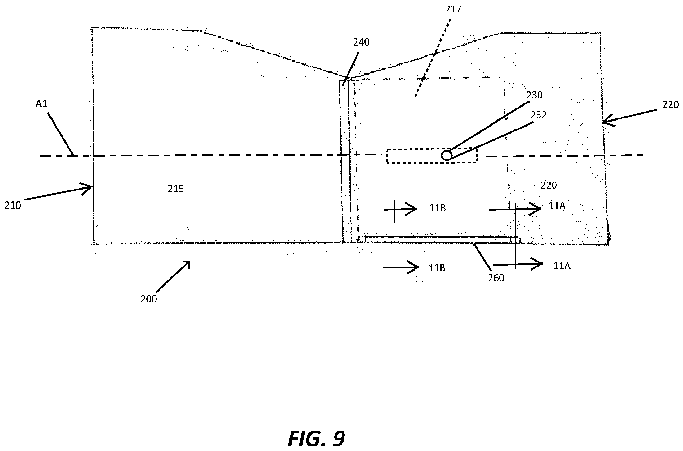

FIG. 9 illustrates a protector 200, according to an embodiment of the present disclosure. In this illustrated embodiment, protector 200 may generally include a two-piece configuration. For example, protector 200 may include a first portion 210 and a second portion 220 connected to each other via a connector 230, which may be a bolt with a nut, such as a wingnut, for example. First portion 210 may include a hinge 240 to facilitate a folding protector 220 in half to minimize a surface area or size and facilitate storage. In other embodiments, first portion 210 may include a fold line instead of a hinge.

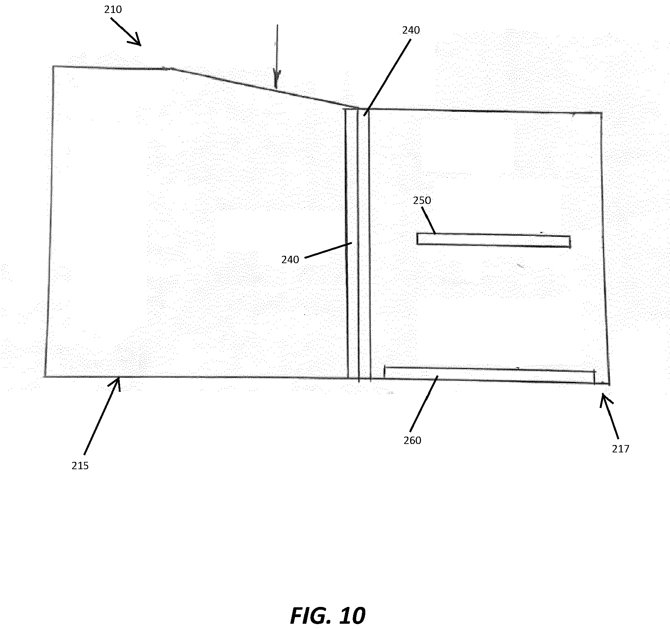

As shown in FIG. 10, first portion 210 may include a left portion 215 and a right portion 217 connected by hinge 240. Right portion 217 may include an adjustment or elongated slot 250 for receiving connector 230 (FIG. 9), which may pass through a hole 232 (FIG. 9) in second portion 220 (FIG. 9). Left portion 215 of first portion 210 may be similar in size and shape as second portion 220.

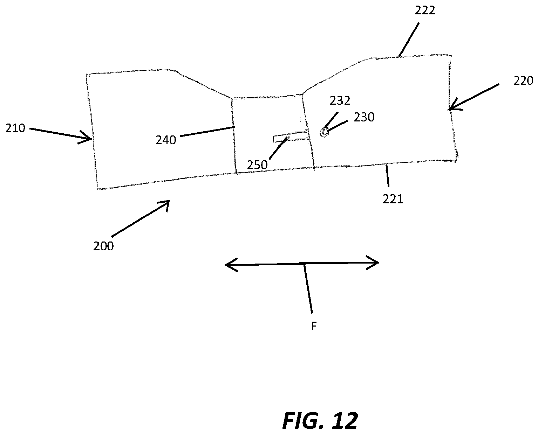

As depicted in FIG. 12, first portion 210 and second left portion 220 may be movably or slidably connected to each other by connector 230 received in slot 250, such that first portion 210 and second portion 220 may be separated from, and moved towards or away from each other, in the direction of the double headed arrow F, while connected. Such movability allows protector 200 to be placed around a tire/wheel (e.g., a tire/wheel 20) or a tire/wheel having a larger or smaller diameter. More specifically, first portion 210 and second portion 220 may be moved relative to each other while connected to each other to allow a best fit of protector 200 around a particular tire to minimize an exposure of a pavement or flooring under protector 200 to a cleaner or other treatment sprayed or otherwise used in a vicinity of the particular tire/wheel and protector 200.

With reference again to FIG. 9, left portion 215 of first portion 210 may have a same or similar shape such that when first portion 210 and second portion 220 are folded toward each other about hinge 240, and when right portion 217 is connected to second portion 220 via connector 230, portions of peripheral edges of left portion 215 of first portion 210 and portions of peripheral edges of second portion 220 may line up to facilitate storage of protector 200. For example, in other embodiments, such storage may be accomplished via rolling up protector 200 and securing via a cord, or hook and loop fasteners.

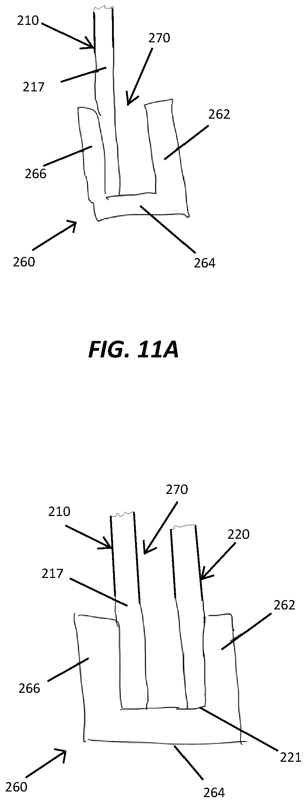

As depicted in FIGS. 9 and 11A, an edge guide 260 such as a U-shaped edge guide may be connected to right portion 217 of first portion 210. For example, a first arm 262 may extend upwardly and along and perpendicular to a longitudinal axis A1 (FIG. 9) of first portion 210. A second arm 264 of edge guide 260 may be connected to first arm 262 and extend along first arm 262 and first portion 210 parallel to a longitudinal dimension or length of first arm 262. A connecting arm 266 may connect to first arm 262 and may be connected to right portion 217 of first portion 210.

A receiving cavity 270 may be bounded by right portion 217, first arm 262 and second arm 264, and may be configured (e.g., shaped and dimensioned) to receive second portion 220 (FIG. 9) when first portion 210 and second portion 220 (FIG. 9) are connected to each other by connector 230 (FIG. 9). As depicted in FIGS. 9 and 11B, for example, a bottom edge 221 of second portion 220 may be received in cavity 270 such that first arm 262 and second arm 264 may contact and retain second portion 220 in a direction upwardly and away from right portion 217 and in a direction perpendicular to the longitudinal dimension of protector 200 and toward edge 221 from opposite edge 222 (FIG. 12). Thus, as second portion 220 is moved relative to first portion 210, second portion 220 may be retained in cavity 270 (i.e., by contact with first arm 262 and second arm 264) and may have a longitudinal dimension thereof aligned (e.g., by contact with first arm 262 and/or second arm 264) with a longitudinal dimension of first portion 210.

As depicted in FIG. 9, edge guide 260 may extend along most of a longitudinal dimension of right portion 217, or edge guide 260 could extend over less of the longitudinal dimension. Further, edge guide 260 could be continuous in a longitudinal dimension or the edge guide could be formed of several smaller edge guides arranged along the longitudinal dimension of right portion 217 to retain second portion 220 in a cavity (e.g., cavity 270) thereof. Also, an edge guide (e.g., edge guide 260) could be formed monolithically and connected (e.g., via a glue or mechanical connector(s)) to right portion 217 or such an edge guide could be formed of individual arms connected to each other (e.g., via glue) and connected to right portion 217. In another example, an edge guide could be formed having two arms connected to right portion 217 instead of three arms (i.e., first arm 262, second arm 264 and connecting arm 266) connected thereto, for example.

As depicted, first portion 210 may include hinge 240 connecting left portion 215 and right portion 217. In another example such a hinge could be formed of one or more hinges made of metal, pewter or plastic, or such hinge could be a perforation or weakened portion to facilitate folding of first portion 210 on second portion 220 to minimize a surface area of protector 200 for storage thereof.

A connector (e.g., connector 230) may extend through a portion (e.g., second portion 220) into another portion (e.g., first portion 210) to connect such portions. The connector could be a bolt with a nut (e.g., a wing nut) thereon to secure a connection of the portions of a protector (e.g., protector 200) to each other while allowing such portions to be adjusted due to the connector being received in a slot of one of the connectors as described above.

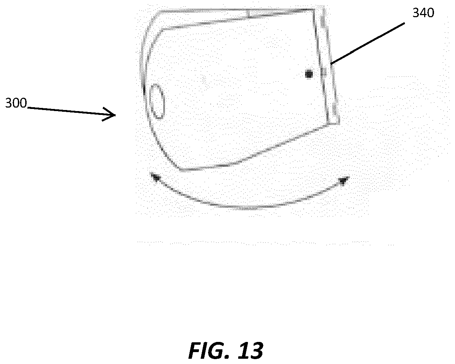

FIGS. 13-20 illustrates a protector 300 according to an embodiment of the present disclosure. In this illustrated embodiment, protector 300 may be similar to protector 200 except that two protector portions may be connected to each other about a hinge while each of such protector portions may include right and left protector portions adjustably connected to each other via a connector and slot as described above relative to protector 200.

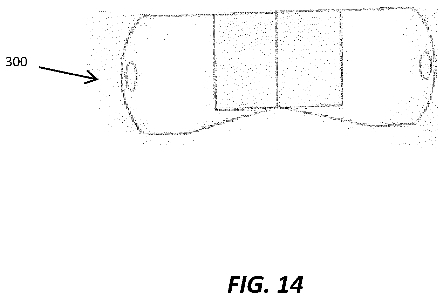

FIGS. 13 and 14 depict protector 300 being unfolded from a folded position (FIG. 13) to an unfolded position (FIG. 14) along a hinge 340 (FIG. 13).

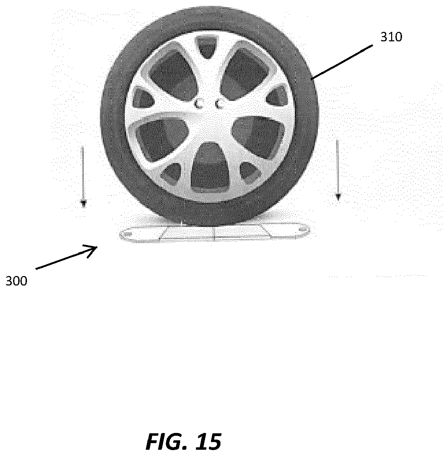

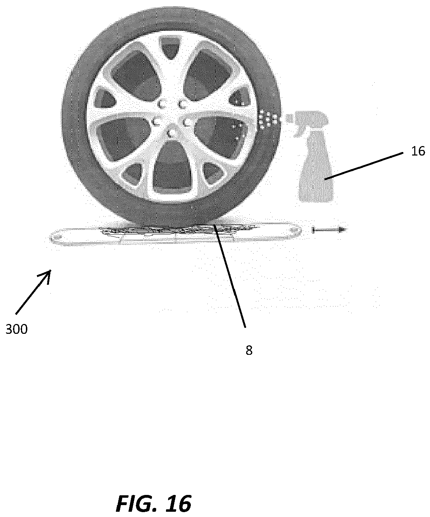

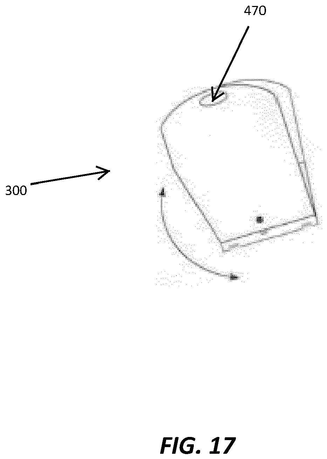

As shown in FIG. 15, protector 300 is located adjacent a tire/wheel 310 or placed on the ground in front of the side of the tire/wheel 310. As shown in FIG. 16 a cleaning or treatment of tire/wheel 310 using an operable product 16 would not cause the cleaning or treatment solution (e.g., ARMOR ALL), e.g., overspray 8, to contaminate a pavement or flooring adjacent tire/wheel 310 since any such solution that may stray outside of an intended path toward the tire/wheel would instead settle on protector 300 thereby protecting the pavement or flooring from being contaminated. After applying the product 16 to the first tire/wheel, the protector is sequentially moved to the remaining tires/wheels when applying the product 16. After such cleaning or treatment of the tires/wheels is completed, protector 300 may be re-folded and stored. For example, a user may grip a handle 470 or protector 300 may be hung on handle 470, as depicted in FIG. 17.

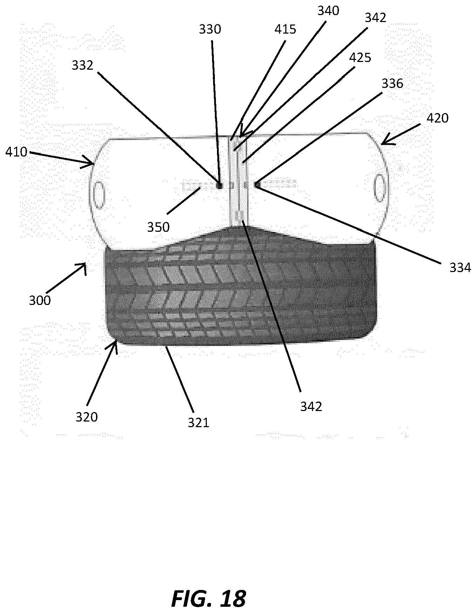

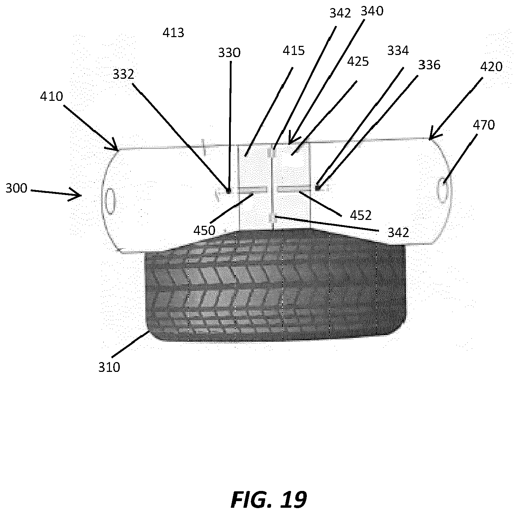

FIGS. 18 and 19 depicts bottom views of protector 300 disposed adjacent to tire/wheel 320 in a retracted position (FIG. 18) such that a first portion 410 and a second portion 420 are closest to one another while first portion 410 is connected to a left portion 415 of hinge 340 and second portion 420 is connected to a right portion 425 of hinge 340 via connectors 330 as described above relative to protector 200 having right portion 217 being connected to second portion 220 via connector 230.

As described above relative to right portion 217 of first portion 210, first portion 410 may include a hole 332 receiving a connector 330 (e.g., a bolt with a wingnut) and left portion 415 may include a slot 450 (FIG. 19) to receive such connector to adjustably connect first portion 410 and left portion 415 of hinge 340. Similarly, second portion 420 may include a hole 334 receiving a connector 336 (e.g., a bolt with a wingnut) and right portion 425 of hinge 340 may include a slot 452 (FIG. 19) to receive such connector to adjustably connect second portion 420 and right portion 425. Left portion 415 of hinge 340 may be connected to right portion 425 of hinge 340 via one or more hinges 342 thereby connecting first portion 410 and second portion 420 to each other.

In an expanded position as depicted in FIG. 19, first portion 410 and second portion 420 may be at a position where the first and second portions are further separated from one another such that first portion 410 is moved relative to left portion 415 of hinge 340 and second portion 420 is moved relative to right portion 425 of hinge 340 while remaining connected. As shown n FIG. 19, the notch may have a trapezoidal shape. First portion 410 and second portion may be moved between such retracted and expanded positions to best fit protector 300 around a particular tire (e.g., tire 321).

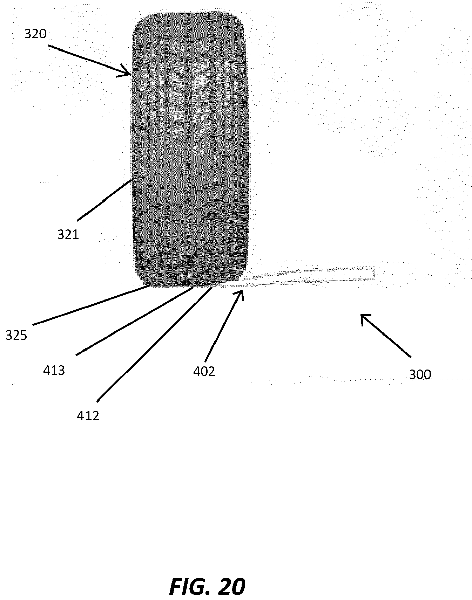

As depicted in FIG. 20, protector 300 may include a sloped portion 402 on a side 412 configured to fit around tire/wheel 320. Such sloped portion may have a thicker portion on an inside portion thereof with protector 300 becoming thinner toward an edge 413 thereof to allow protector 300 to be received further under and/or around tire 321 relative to protector 300. More specifically, edge 413 may be thinner than an equivalent location of protector 300 such that edge 413 may be received into a smaller opening or space between the tire tread 325 and the pavement or flooring where tire 321 does not contact the pavement or flooring, and the slope of protector 300 may allow protector 300 to be more easily pushed or otherwise placed in any such openings or space, such that protector 300 may be frictionally engaged with tire 321 thereby minimizing a chance of inadvertent separation of protector 300 from tire 321 during treatment and/or cleaning of tire/wheel 310.

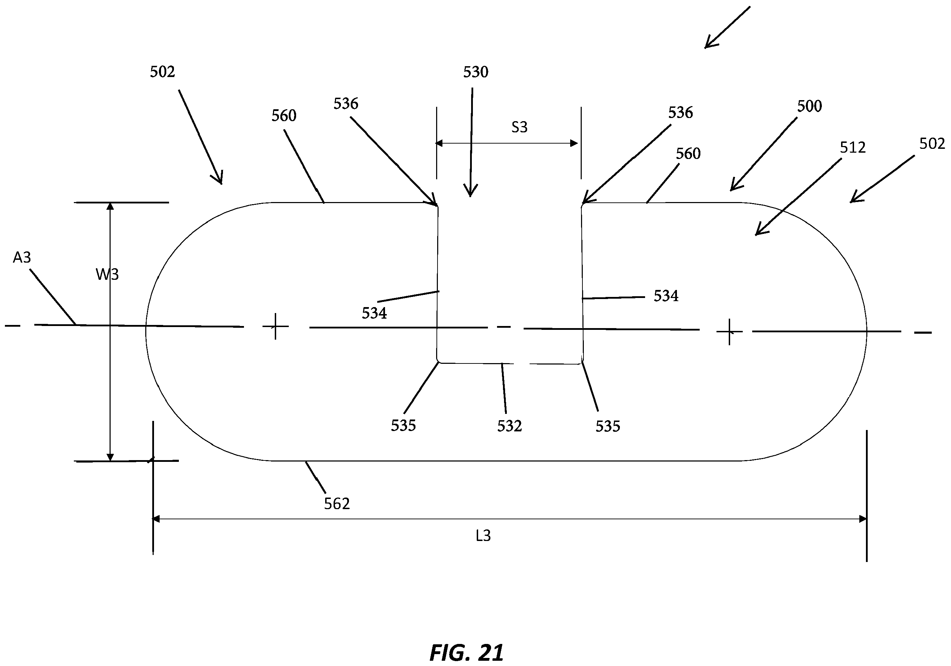

FIG. 21 illustrates a protector 500 having an elongated body 512 with rounded outside corners or ends 502, according to an embodiment of the present disclosure. For example, protector 500 may be essentially the same as protector 10 (FIG. 1) with the exception of having differently shaped ends, and a differently configured cutout. Rounded corners or ends 502 may have radii of about 9 inches. Further, protector 500 may include a square or rectangular opening or notch 530 bounded by opposite spaced apart sides 534 aligned perpendicularly to a longitudinal axis A3 of protector 500. Sides 534 may have a length of about 10 inches while protector 500 may have a longitudinal length L3 of about 38 inches, and a width W3 of about 18 inches.

Opposite sides 534 may be connected to an interior side 532 by rounded corners 535 having radii of about 0.25 inches with interior side 532 and opening 530 having a length S3 of about 8 inches in a direction parallel to longitudinal axis A3 of protector 500. Also, opposite spaced apart sides 534 may be connected to an exterior peripheral sides 560 by rounded corners 536 having radii of about 0.25 inches. A second exterior peripheral side 562 may be about parallel and spaced a distance W3 about 18 inches relative to exterior sides 560. Protector may be about 0.125 inch in thickness, for example.

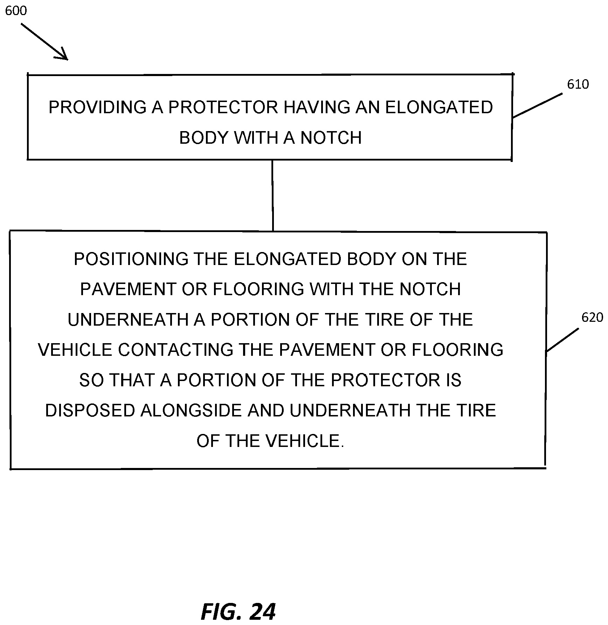

FIG. 24 illustrates a method 600 for protecting pavement or flooring while cleaning a tire of a vehicle, according to an embodiment of the present disclosure. In this illustrated embodiment, method 600 includes at 610 providing a protector having a notch, and at 620 positioning the notch underneath a portion of the tire of the vehicle contacting the pavement or flooring so that a portion of the protector is disposed alongside and underneath the tire of the vehicle. For example, the positioning may include positioning the elongated body underneath a forward portion of the tire, and underneath a back portion of the tire. In some embodiments, the providing may include unfolding the protector. Further embodiments may include spraying the tire with a product, collecting overspray of the product on the protector, cleaning the tire, removing the protector from underneath the tire, and positioning the notch underneath a portion of a second tire of the vehicle contacting the pavement or flooring so that a portion of the protector is disposed underneath and in front of a side wall of the second tire of the vehicle. Still other embodiments may include cleaning the interior and exterior of the vehicle.

The protectors of the present disclosure may be made of a rubber (e.g., neoprene), plastic, cardboard, or another material or combination of material that is resistant to or impermeable to a passage of liquids, such as cleaners and tire treatment products, therethrough to allow a protection of flooring and pavement as described above. In other examples such protectors may absorb such cleaners and/or treatment products while inhibiting a passage of such products therethrough. For example, the protectors may be operable for use with, e.g., Armor All, Black Magic, VRP Tire Shine, Meguiar's Tire Dressing, etc., for wheel rims or tires for at least a period of time during treatment or cleaning such that the cleaning and/or treatment products that may not be applied (e.g., overspray 8 as shown in FIG. 6) to a tire or wheel are inhibited or prevented from passing through the protector to the pavement or flooring on which protectors and tires/wheels may be located.

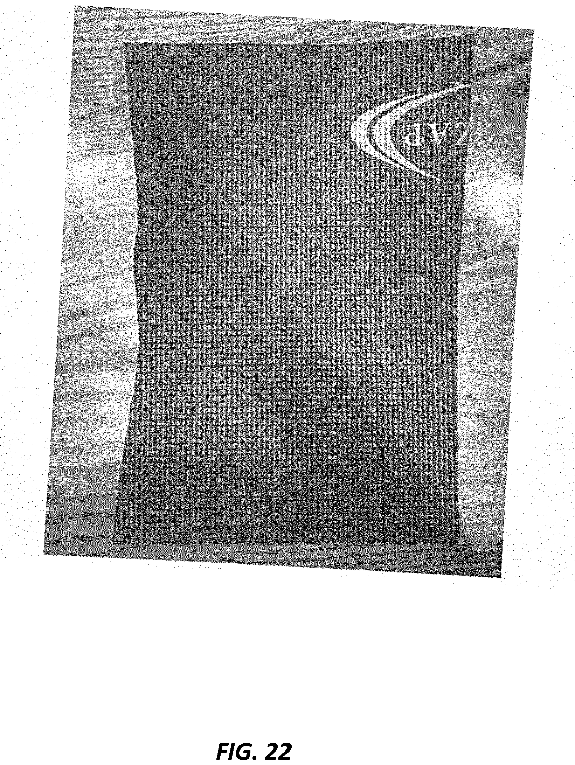

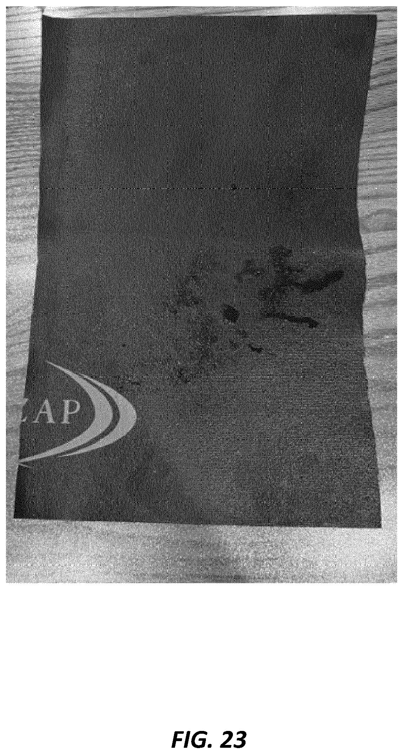

In some embodiments, the protectors may be formed of neoprene rubber having, e.g., a 2 mm thick waffle configuration, as shown in FIG. 22, or a 3 mm thick smooth solid configuration as shown in FIG. 23.

The protectors could be made of multiple materials connected to each other and/or arranged in layers to provide any such absorbency and impermeability. The protectors may be formed of a cardboard material or other material(s) as retaining a same shape and foldability as described above. The protectors may have a thickness of 0.125 mm, 2 mm or 3 mm, for example.

As may be recognized by those of ordinary skill in the art based on the teachings herein, numerous changes and modifications may be made to the above-described and other embodiments of the present disclosure without departing from the scope of the disclosure. In addition, the devices and apparatus may include more or fewer components or features than the embodiments as described and illustrated herein. Further, the above-described embodiments and/or aspects thereof may be used in combination with each other. Accordingly, this detailed description of the currently-preferred embodiments is to be taken as illustrative, as opposed to limiting the disclosure.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements but is not limited to possessing only those one or more steps or elements. Likewise, a step of a method or an element of a device that "comprises", "has", "includes" or "contains" one or more features possesses those one or more features but is not limited to possessing only those one or more features. Furthermore, a device or structure that is configured in a certain way is configured in at least that way but may also be configured in ways that are not listed.

For the purposes of promoting an understanding of the principles of the disclosure, reference is made above to embodiments of the disclosure and specific language describing the same. It will nevertheless be understood that no limitation of the scope of the disclosure is thereby intended, and any alterations and further modifications in the described embodiments, and any further applications of the principles of the disclosure as illustrated therein as would normally occur to one skilled in the art to which the disclosure relates are contemplated and protected.

## Claims

1. A protector for protecting pavement or flooring while cleaning a vehicle tire, the protector comprising:
an elongated body comprising:
a top side, a bottom side, and a peripheral edge disposed between the top side and the bottom side;
a notch extending from the top side to the bottom side and inwardly from the peripheral edge; and
the notch sized and configured so that the protector is positionable with the bottom side disposed on the pavement or flooring and with the notch extending around a portion of the tire treads in contact with the pavement or flooring.

2. The protector of claim 1 wherein:
the notch is sized and configured so that the protector is positionable with the bottom side disposed on the pavement or flooring and with the notch extending around a side wall of the tire, underneath a front side of the treads of the tire in contact with the pavement or flooring, and underneath a back side of the treads of the tire in contact with the pavement or flooring.

3. The protector of claim 1 wherein:
the elongated body comprises a length greater than the diameter of the tire.

4. The protector of claim 1 wherein:
the elongated body comprises a length greater than a width;
the notch extends inwardly from the peripheral edges along the length of the elongated body; and
the elongated body tapering towards an opening of the notch.

5. The protector of claim 1 wherein:
the notch comprises a rectangular notch, a half obround notch, or a trapezoidal-shaped notch.

6. The protector of claim 1 wherein:
the elongated body comprises a planar rectangular configuration having a first major edge, a second major edge, a first minor edge, and a second minor edge; and
the notch extends inwardly from one of the first or second major edges.

7. The protector of claim 1 wherein:
the elongated body comprises a planar obround configuration with spaced apart parallel peripheral edges, a first hemispherical peripheral edge, and second hemispherical peripheral edge, and
the notch extends inwardly from one of the parallel peripheral edges.

8. The protector of claim 1 wherein:
the elongated body comprises a monolithic-piece elongated body.

9. The protector of claim 1 wherein:
the elongated body comprises a plurality of fold lines so that the elongated body comprises a folded compact configuration and a second unfolded configuration.

10. The protector of claim 9 wherein:
the plurality of fold lines comprises a longitudinal fold line and at least one transverse fold lines.

11. The protector of claim 1 wherein:
the elongated body comprises at least a two-piece elongated body.

12. The protector of claim 1 wherein:
the elongated body comprises a two-piece elongated body having a first portion and a second portion.
a connector for adjustably connecting overlapping portions of the first portion and the second portion.

13. The protector of claim 1 wherein the elongated body comprises:
a length between 24 inches and 45 inches;
a width between 8 inches and 15 inches;
a thickness less than 1 inch; and
the notch having a width between 4 inches and 8 inches.

14. The protector of claim 13 wherein:
the elongated body comprises cardboard or neoprene rubber.

15. The protector of claim 1 further comprising:
at least one protectant and/or cleaning product.

16. The protector of claim 15 further comprising:
packaging for containing the system and at least one protectant and/or cleaning product.

17. A method for protecting pavement or flooring while cleaning a tire of a vehicle, the method comprising:
providing the protector of claim 1; and
positioning the protector with the bottom side disposed on the pavement or flooring and with the notch extending around a side wall of the tire, underneath a front side of the treads of the tire, and underneath a back side of the treads of the tire.

18. The method of claim 17 wherein:
the providing comprises providing the protector having fold lines; and
the providing comprises unfolding the protector along the fold lines resulting in the protector having a flat planar configuration.

19. The method of claim 17 further comprising:
spraying the tire with a product;
collecting overspray of the product on the protector; and
removing the protector from underneath the tire.

20. A method for protecting pavement or flooring while cleaning a tire of a vehicle, the method comprising:
providing a protector having an elongated body with a notch; and
positioning the elongated body on the pavement or flooring with the notch around a portion of the tire of the vehicle contacting the pavement or flooring so that a portion of the protector is disposed alongside and underneath the tire of the vehicle.

21. The method of claim 20 wherein:
the positioning comprises positioning the elongated body underneath a forward portion of the tire, and underneath a rearward portion of the tire.

22. The method of claim 20 wherein:
the providing comprises unfolding the protector.

23. The method of claim 20 further comprising:
spraying the tire with a product;
collecting overspray of the product on the protector;
cleaning the tire;
removing the protector from underneath the tire; and
positioning the elongated body of the pavement or flooring with the notch around a portion of a second tire of the vehicle contacting the pavement or flooring so that a portion of the protector is disposed alongside and underneath the second tire of the vehicle.

24. The method of claim 20 further comprising:
cleaning the interior and exterior of the vehicle.

25. The method of claim 20 wherein:
the elongated body tapers towards an opening of the notch, and further comprising frictionally engaging the protector between the tire and the pavement or flooring.
